Europäisches Patentamt

European Patent Office

Office européen des brevets

(11) Veröffentlichungsnummer: **0 508 382 A1**

## EUROPÄISCHE PATENTANMELDUNG

(21) Anmeldenummer: **92106011.7**

(22) Anmeldetag: **07.04.92**

(51) Int. Cl.[5]: **C05F 7/00**, C02F 11/12

(30) Priorität: **08.04.91 DE 4111314**

(43) Veröffentlichungstag der Anmeldung:
**14.10.92 Patentblatt 92/42**

(84) Benannte Vertragsstaaten:
**AT BE CH DE DK ES FR GB IT LI NL SE**

(71) Anmelder: **ALLIED COLLOIDS GmbH**
**Tarpenring 23**
**W-2000 Hamburg 62(DE)**

(72) Erfinder: **Heydrich, Klaus**
**Im Wiesengrund 26**
**W-6384 Schmitten 6(DE)**

(74) Vertreter: **Vogeser, Werner, Dipl.-Ing. et al**
**Patentanwälte Hansmann, Vogeser, Alber,**
**Dr. Strych, Albert-Rosshaupter-Strasse 65**
**W-8000 München 70(DE)**

(54) **Verfahren zur biologischen Trocknung von Klärschlamm.**

(57) Beschrieben wird ein Verfahren zur biologischen Trocknung von Klärschlamm durch mechanische Entwässerung des Klärschlamms, aerobe mikrobielle Vorrotte und aerobe mehrwöchige Nachrotte, wobei zur chargenweisen und/oder kontinuierlichen Trocknung des Klärschlamms eines gegebenenfalls vorbehandelten Substrats aus Vorrotte und/oder Nachrotte (Rückgut) als Konditionierungsmittel Additive zugesetzt werden und das so behandelte Rückgut mit neuem, unbehandeltem Klärschlamm im Kreislauf geführt wird. Die verwendeten spezifischen Additive und/oder Mischungen dieser Additive und ihr Einfluß auf den Klärschlamm werden ebenfalls beschrieben.

EP 0 508 382 A1

Rank Xerox (UK) Business Services

Die Erfindung betrifft ein Verfahren zur biologischen Trocknung von Klärschlamm gemäß dem Oberbegriff des Anspruchs 1.

Nachdem die Verwendung von Klärschlamm als landwirtschaftliches Düngemittel wegen der Belastung mit zum Teil hochgiftigen Schadstoffen mit gewissen Auflagen verbunden ist, ist wegen des erwachenden Umweltbewußtseins der Bevölkerung die umweltschonende Beseitigung von Klärschlämmen ein wichtiges, heute und in der Zukunft zu lösendes Problem.

Klärschlämme entstehen durch die Aufbereitung kommunaler und zum Teil auch industrieller Abwässer, welche in den mechanischen, biologischen und chemischen Klärstufen einer Kläranlage mit einem hohen Wasseranteil und einem sehr hohen OTS-Anteil flüssig anfallen.

Zur Beseitigung dieser dünnflüssigen Schlämme werden diese, gegebenenfalls nach einer chemischen Konditionierungsstufe, maschinell entwässert und mit Zuschlagstoffen, wie Kalk, Zementstaub, Asche und ähnlichem verfestigt, deponiert oder thermisch bei hohen Temperaturen getrocknet oder verascht. Ein Nachteil der so behandelten Klärschlämme ist, daß zum einen eine erhebliche Mengenzunahme erfolgt, zum anderen unter der Einwirkung des sauren Regens besonders die Kalkzuschläge sich zersetzen und der verfestigte sowie gegebenenfalls bereits deponierte Klärschlamm wieder zu einer nicht mehr deponierfähigen pastösen Masse umgewandelt wird.

Bei der thermischen Trocknung des entwässerten Klärschlammes wird das Wasser verdampft und es findet eine Massereduzierung bis zu 80% statt. Der Nachteil dieser Trocknung besteht jedoch darin, daß äußerst geruchsintensive und teilweise auch giftige Brüden entstehen, die einer erneuten Beseitigung in einer Klärung unterliegen, wobei durch die Einwirkung von Mikroben gefährliche Abgase entstehen und durch den Einfluß des Regens das gefährliche Deponiesickerwasser entstehen kann.

Eine andere Möglichkeit der Beseitigung der Klärschlämme bietet die Verbrennung der getrockneten Schlämme sowie das Einarbeiten getrockneter Schlämme durch Verbrennen der Klärschlämme und Einarbeiten der Asche in Bitumenerzeugnisse. Dies ist wegen der hohen Energiekosten und der erforderlichen Investitionen für die Verbrennungsanlagen und der dabei entstehenden z.T. hochgiftigen Abgase sowie der möglichen Auswaschung der Giftstoffe aus den Bitumenerzeugnissen durch chemische Umsetzungen noch mit ziemlichen Unabwägbarkeiten verbunden.

Aus der älteren Anmeldung P 40 19 389 ist ein Verfahren zum Umwandeln von Klärschlamm in ein humusähnliches Substrat sowie Vorrichtungen zu dessen Durchführung bekannt, welche aufgrund eines optimierten Prozeßablaufes nur geringe Betriebskosten verursachen und wobei die aus Investitions- und laufenden Kosten zusammengesetzten Gesamtkosten ein Minimum betragen.

Aufgabe der Erfindung ist es daher, ein Verfahren zur biologischen Trocknung von Klärschlamm bereitzustellen, bei dem Klärschlamm in ein humusähnliches Substrat umgewandelt wird, und bei dem die mit dem bekannten Verfahren erreichte Verringerung der OTS noch einmal erheblich gesteigert wird, wobei ein gegebenenfalls für die Deponierung hervorragend geeignetes Produkt erhalten wird.

Erfindungsgemäß wird diese Aufgabe durch die im Patentanspruch 1 angegebenen Merkmale gelöst, bei der zur chargenweisen oder kontinuierlichen Trocknung des Klärschlamms einem aus der Vorrotte und/oder Nachrotte erhaltenem, gegebenenfalls vorbehandeltem Rückgut als Konditionierungsmittel Additive zugesetzt werden, und das mit den Additiven versetzte Rückgut mit neuem Klärschlamm im Kreislauf geführt wird.

Mittels der erfindungsgemäßen Maßnahmen kommt es dabei zu einer Begünstigung der normalen Biozönose und eines natürlichen Verlaufs, wobei ein optimales Rückgut bei maximalem Kohlenstoffabbau und gleichzeitiger Dekontaminierung des eingesetzten Klärschlammes erfolgt.

Im Sinne der nachfolgenden Definitionen ist unter

- Vorrotte die aerobe mikrobielle Umsetzung eines mechanisch vorentwässerten Klärschlammes über einen Zeitraum von 5 bis 10 Tagen bei Temperaturen von 50 bis 90 °C,
- Nachrotte die aerobe mehrwöchige Umsetzung des aus der Vorrotte stammenden Substrates ohne aktive Belüftung bei Temperaturen von 10 bis 90 °C durch Mikroben und insbesondere Pilze,
- Rückgut ein aus der Vorrotte und/oder Nachrotte erhaltenes Substrat,
- %-OTS der organische Trockensubstanzgehalt des Klärschlamms, und
- %-TS der Trockensubstanzgehalt des Klärschlamms

zu verstehen, wobei der %-OTS-Gehalt auf den TS-Gehalt als 100 % bezogen ist.

Erfindungsgemäß werden dem aus der Vor- und/oder Nachrotte stammenden Rückgut als Additive Verdickungsmittel, Absorptionsmittel, Enzyme, Bakterien, Lösungsvermittler bzw. Netzmittel oder Membraneffektoren und/oder Mischungen der vorstehend genannten Additive zugesetzt. Diese Additive dienen zum einen der Ingangsetzung der Kompostierung, zum anderen der Aufrechterhaltung des kontinuierlichen bzw. chargenweise betriebenen Prozesses bzw. der reversiblen Aufnahme von Wasser. Zugleich kommt es zu einer zeitlichen und qualitativen Beschleunigung der Umsetzung des zu entwässernden Klärschlammes derart, daß die Kompostierungstemperatur erhöht wird, wobei der Kohlenstoffabbau auf einen Gehalt von weniger als 25%, insbesondere bis zu 20%, im erhaltenen Gut eingestellt werden kann, was gut für Deponierungszwecke ist. Als Folge davon kommt es auf der Deponie auch zu einer Verringerung der Gasentwicklung sowie zu einer Verringerung der Eluierung der Kohlenstoffbestandteile ins Grundwasser. Überdies können durch die erfindungsgemäße Verfahrensweise auch Substratschwankungen leichter ausgeglichen werden, wobei erfindungsgemäß ein Endmaterial erhalten wird, das sehr erdähnlich ist und das alleine, ohne Zusatz von z.B. Brandkalk abgelagert werden kann.

Gemäß einer Ausführungsform der Erfindung werden dem aus der Vor- und/oder Nachrotte erhaltenen Rückgut als Additive Alginate, Bentonite und/oder Montmorillonite zugesetzt. Als für die Erfindung geeignet hat sich dabei gezeigt, diese Additive in von 0,05 bis 1,5 Gew.-%, insbesondere von 0,1 bis 1 Gew.-%, bezogen auf das gesamte in den Kreislauf eingeführte Rückgut, einzusetzen. Die gelierfähigen, aus enzymatisch aufgeschlossenen Braunalgen gewonnenen Alginate dienen dabei als das Verdickungsmittel, das das Wasser hält und zugleich das Nährstoffangebot wegen des Gehalts an Kohlenhydraten, Proteinen, Spurenelementen, Vitaminen und Phytohormonen für die aus der Vor- und/oder Nachrotte stammenden Bakterien darstellt. Zugleich puffern diese Alginate und die in ihnen zum Teil aufgrund der Herstellung enthaltenen Polyuronsäuren die in dem Klärschlamm enthaltenen toxischen Stoffe und begünstigen die Kompostierung. Als für die Erfindung geeignete Alginate haben sich dabei die unter den Namen Bio-Algihum[R] und Bio-KlarAlgin[R] handelsüblich erhältlichen Produkte gezeigt, die als natürliche Boden- und Pflanzenhilfsstoffe in granulierter und strukturviskoser Form aus speziell aufbereiteten Braunalgen gewonnen werden, denen zur Steigerung ihrer Wirkung hochmolekulare Kohlenhydrate zugesetzt sind. Wegen der Verwendung von ausschließlich Naturprodukten sind diese Produkte umweltfreundlich und somit für Menschen, Tiere und Pflanzen unschädlich.

Zur Steigerung der Kompostierfähigkeit hat es sich als vorteilhaft erwiesen, als Absorptionsmittel Bentonite und/oder Montmorillonite allein oder gemischt mit Alginaten einzusetzen. Als geeignete Bentonite haben sich dabei handelsüblich erhältliche, sauer aufgeschlossene Bentonite aller Mahlgrade mit Teilchengrößen von 0,001 bis 0,1 mm gezeigt, wobei feinteilige Bentonite einer Teilchengröße von 0,005 bis 0,02 mm bevorzugt werden. Die durch den erfindungsgemäßen Einsatz der Mischung erzielten Vorteile sind dabei die Unterstützung der Proteinspaltung, die Dekontaminierung toxischer Stoffe durch die Absorption, d.h. Einlagerung in die Matrix der teilchenförmigen Absorptionsmittel, die Wirkung als wasserbindendes Mittel und das thixotrope Verhalten sowie die Quellfähigkeit. Gleichzeitig verhält sich die erfindungsgemäße Mischung gegenüber bereits sich in dem Rückgut befindlichen Bakterien neutral, wobei auch die sich in dem Gemisch befindlichen Bakterien durch die im Rückgut befindlichen toxischen Stoffe nicht abgetötet werden. Zusätzlich kommt es zu einem Ionenaustausch toxischer Ionen, wie Nickel, Cadmium oder dergleichen, durch $Na^+$-Ionen, was zu einer Entgiftung des in den Kreislauf eingeführten Rückgutes führt. Mit der erfindungsgemäßen Mischung gemäß der ersten Ausführungsform ist es überdies möglich, die Kompostiertemperatur zu steigern, wobei es zu einem erhöhten Umsatz für das Rückgut bzw. für das Substrat kommt.

Zusätzliche, erfindungsgemäß verwendete Absorptionsmittel sind Vermiculite sowie insbesondere handelsüblich erhältliche wasserabsorbierende und in Wasser und in den meisten organischen Lösungsmitteln unlösliche, synthetische, z.T. quervernetzte Polymere und/oder Copolymere auf Basis von Acrylsäure und/oder Acrylamid oder deren Salze, die als Hilfsmittel zur weiteren Entwässerung des Klärschlamms eingesetzt werden und dabei, in Abhängigkeit von der Zusammensetzung der Klärschlämme bis zum 400-fachen, insbesondere bis zum 70-fachen ihres Gewichtes an Wasser und bis zum 100-fachen, insbesondere bis zum 25-fachen ihres Gewichtes an Salzlösungen aufnehmen können. Aufgrund ihrer großen pH-Beständigkeit über einen weiten pH-Bereich sind letztere im wesentlichen auf fast alle kommunalen und/oder industriellen Klärschlämme anwendbar. Als für die Erfindung besonders geeignet gezeigt haben sich dabei die Produkte der Alcosorb[R]-Reihe von Allied Colloids.

Gemäß einer weiteren Ausführungsform der Erfindung werden dem aus der Vorrotte und/oder Nachrotte stammendem, dem Klärschlamm zugesetztem Rückgut hydrolytische Enzyme und/oder selektierte Bakterien zugesetzt. Die Zugabe der hydrolytischen Enzyme, die dem Rückgut als Trokkenprodukte, Lösungen und/oder Suspensionen an geeigneter Stelle selektiv zugesetzt werden, führt dabei zur Spaltung der makromolekularen Kohlenwasserstoffe und Polysaccharide sowie anderer organischer Komponenten in dem Klärschlamm, die den Proteinstoffwechsel beeinflussen, so daß ein Abbau polymerer Kohlenstoffverbindungen in niedere Verbindungen geringerer Kohlenstoffanzahl bis hin zur Veratmung in Kohlendioxid und Wasser erfolgen kann. Von Vorteil ist dabei der Einsatz der Enzyme als Lösung und/oder Suspension, da bei Einsatz von Trockenprodukten wegen möglicher Allergien Sicherheitsvorkehrungen getroffen werden sollten oder müßten. Erfindungsgemäß können die handelsüblich erhältlichen Enzyme und/oder Enzymgemische in reiner Form oder in technischer Reinheit eingesetzt werden. Aus Kostengründen werden Enzyme und Enzymgemische technischer Grade bevorzugt. Ein Zusatz der Enzyme und/oder der Enzymgemische kann außer dem Rückgut allein auch bereits in das Gesamtsystem erfolgen.

Für die Zwecke der Erfindung hat es sich dabei als geeignet gezeigt, Mischungen aus Amylasen, Lipasen, Cellulasen, Proteasen, Carbohydrasen und/oder Glycoproteinasen in Mengen von ca. 0,05 bis 10 ppm, vorzugsweise 0,1 bis 1 ppm einer Aktivität von 100%, bezogen auf den Einzelstoff, einzusetzen, wobei die Aktivität der Einzelkomponenten der Enzyme und/oder des Enzymgemisches wegen der schwankenden Enzymaktivität unter 1 % liegen kann. Durch Einsatz der erfindungsgemäßen Enzyme und/oder Mischungen davon in das Rückgut erfolgt ein schnellerer Start der Umsetzung, und zwar schon innerhalb eines Zeitraumes von 1 bis 2 h gegenüber sonst 10 bis 20 h, sowie der Abbau der kohlenstoffhaltigen Verbindungen schon innerhalb 2 bis 5 Tagen gegenüber sonst 7 Tagen. Gegenüber den bekannten Verfahren kann sich dadurch der Start der Umsetzung um den Faktor 10 verringern und der Abbau in einem um etwa 2 bis 5 Tage verkürzten Zeitraum erfolgen. Mit der erfindungsgemäßen Verfahrensweise ist auch eine Veratmung des Kohlenstoffs und der anderen organischen Inhaltsstoffe in dem Klärschlamm auf einen OTS-Gehalt unter 25% im Substrat gegenüber einem OTS-Gehalt von 40 bis 35% möglich. Zugleich ergibt sich eine stabilere und höhere Kompostiertemperatur, die dazu führt, daß ein geeignetes Deponieprodukt oder ein Substrat als Einheitserde mit einem Mindesthumusanteil ohne Mischung mit Erde als Mutterbodenersatz entsteht.

Mit den erfindungsgemäß zugesetzten hydrolytischen Enzymen ist überdies auch ein gezielter Abbau mineralischer, pflanzlicher und tierischer Fette und Öle, wie sie im Fettfang- und Rechengut enthalten sein können, sowie kontaminierender Stoffe, wie halogenierter aliphatischer und aromatischer Verbindungen sowie heterocyclischer Verbindungen, wie Furane und Dioxine, unter Verwendung von später beschriebenen Netzmitteln als Lösungsvermittler bzw. anorganischer Katalysatoren, wie bekannte Zink-, Nickel-, Kupfer[I,II]-Salze, bzw. gitterförmigen Metallstäben, z.B. Kupferstäben, die den Abbau der Schadstoffe zeitlich wesentlich beschleunigen, möglich. Insbesondere haben sich als für Dioxine geeignete Zusätze Kupfersalze als anorganische Katalysatoren erwiesen, wobei diese in Mengen von 10 bis 1000 ppm, bezogen auf das Gewicht des Rückgutes, eingesetzt werden.

Erfindungsgemäß können gefriergetrocknete und/oder direkt aus Fermentern selektierte Bakterien allein oder in Verbindung mit den vorstehend genannten hydrolytischen Enzymen dem Rückgut zugesetzt werden, wobei gezielte Abbauleistungen unerwünschter kontaminierender organischer Inhaltstoffe im Rückgut auf ähnliche Weise wie bei den zuvor beschriebenen Enzymen erzielt werden. Als für die Erfindung geeignet hat es sich dabei gezeigt, die Menge der selektierten Bakterien in von ca. 0,1 bis 1500 ppm aktivierter Masse selektierter Bakterien pro Gewicht des Substrats aus wäßriger Lösung einzusetzen. Vorteilhafterweise werden diese selektierten Bakterien in Mengen von 1 bis 1000 ppm, insbesondere in von 5 bis 500 ppm zugesetzt. Die Menge der zugesetzten selektierten Bakterien hängt dabei davon ab, ob eine höhere Effektivität als bei Enzymen allein gewünscht wird, sowie davon, ob aufgrund der Abbaumechanismen ein höheres Bakterienalter erforderlich ist. Dies ist zum Beispiel dann erforderlich, wenn sie dem Rückgut zum Konditionieren und Abbau von hochbelasteteten Stoffen zugesetzt werden, z.B. halogenierten Aliphaten und Aromaten sowie heterocyclischen Verbindungen, wie Furanen und Dioxinen, bei denen ein Bakterienalter von mehr als 7 Tagen erforderlich ist.

Als geeignete, die Konditionierung des dem Klärschlamm zugesetzten Rückgutes positiv beeinflussende selektierende Bakterien haben sich handelsüblich erhältliche Bakterienprodukte erwiesen, wie die Produkte der Ecolyte-Reihe, die verschiedene Stämme speziell gezüchteter und adaptierter Mikroorganismen, grenzflächenaktive Substanzen sowie teilweise freie Enzyme enthalten, wobei das Trägermaterial auf Getreidebasis hergestellt wurde und es sich bei den erhältlichen Mikroorganismen um besonders leistungsfähige Varianten natürlich vorkommender Spezien handelt. Diese Produkttypen stellen spezielle Mischungen von bis zu 20 unterschiedlichen Stämmen von Mikroorganismen dar, die jeweils auf spezielle Anwendungsfälle zubereitet worden sind.

Je nach der Aufgabenstellung werden dabei Kombinationen der möglichen selektierten Bakterien eingesetzt. Für spezielle Einsatzfälle werden dabei Bakterien zur allgemeinen Aktivierung der Biomasse (MX20 von Allied Colloids), Bakterien für Öle und Fette tierischer oder pflanzlicher Herkunft (MX25, MX30 von Allied Colloids), für den Abbau von Seifen und Detergenzien (MX65 von Allied Colloids), für den Abbau von Cellulose aus Frucht- und Gemüseresten aus Industrie und Gewerbe sowie auch aus der Cellulosefabrikation der Papierschlämme (CX70 von Allied Colloids), Bakterien, die den Abbau aliphatischer und aromatischer Verbindungen in Schlämmen aus der chemischen Industrie, die insbesondere eine gesteigerte Resistenz gegen toxische Substanzen aufweisen, und die ein besonders breites Wirkungsspektrum zeigen, selektierte Bakterien, die den Abbau von Mineralölen und anderen aliphatischen und aromatischen Kohlenwasserstoffverbindungen und deren Derivaten einleiten bzw. beschleunigen (CX80, CX 90 von Allied Colloids), und handelsüblich erhältliche Produkte selektierter Bakterien, die zum Abbau aromatischer und/oder heterocyclischer Verbindungen, wie Benzol, Benzoesäure, Phenole, Toluol Cresol, Anthrazen, Anilin, Pyridin, Pyrazin, Biphenylen sowie den mit niederen Alkylgruppen mit von 1 bis 3 C-Atomen oder Nitrogruppen substituierten sowie halogenierten Derivaten dieser Verbindungen und den Isomeren dieser Verbindungen geeignet sind (TM-HAB von InterBio).

Beim Einsatz von solchen Enzym- und/oder selektierten Bakterien-Mischungen ist dabei auf eine optimale Verteilung der vorstehend genannten Stoffe über das gesamte, dem Klärschlamm zugesetzte Rückgut zu achten, damit eine Effektivität an allen Stellen des Rückgutes durch richtige Verteilung erzielt wird. Für die erfindungsgemäßen Zwecke hat es sich dabei gezeigt, diese Additive aus der Lösung und/oder Suspension in Verbindung mit später genannten Lösungsvermittlern bzw. Netzmitteln bereits in den Schlamm vor oder während der Entwässerung, spätestens jedoch vor dem Mischer in das auf eine bestimmte Korngröße gemahlene Rückgut bzw. den entwässerten Schlamm einzusetzen, da die Wirkung dieser Additive im Biotrockner nach qualitativ und quantitativ richtiger Dosierung, durch Mischung und Einhaltung optimaler pH-Werte von pH 5,5 bis 8,5, insbesondere pH 6,0 bis 8,0, sowie besonders vorteilhaft in einem Bereich von pH 6,8 bis 7,2, bei Temperaturen von 35°C bis 90°C sowie Reaktionszeiten von 1 bis 7 Tagen eintritt. Sauerstoffversorgung und notfalls eine Nachbearbeitung des Rückgutes durch Lösungen bzw. Suspensionen vorstehend genannter Enzyme und/oder selektierter Bakterien nach dem Gießkannenprinzip, auch zum Zwecke der Rückbefeuchtung, sind aus dem Stand der Technik hinreichend bekannt und bedürfen daher keiner näheren Erläuterung.

Erfindungsgemäß können dem Rückgut Lösungsvermittler und Verdickungsmittel und/oder Absorptionsmittel in einem pH-Bereich von 4 bis 12 je nach Erfordernissen zugesetzt werden. In Abhängigkeit von der Belastung von mit organischen Kohlenwasserstoffen belasteten Klärschlämmen hat es sich als vorteilhaft erwiesen, anionische und/oder kationische Tenside als zum Beispiel wäßrige Lösung dieser grenzflächen- und waschaktiven Substanzen zur Dekontaminierung, insbesondere von Klärschlämmen, die mit mineralischen Ölen und Fetten oder mit tierischen und pflanzlichen Ölen und Fetten kontaminiert sind, in einer Menge von 0,1 bis 1 Gew.-%, insbesondere in Mengen von 0,3 bis 0,8 Gew.-%, bezogen auf das aus Vor- und/oder Nachrotte stammende, dem neuen Klärschlamm als Konditionierungsmittel zugesetzte Rückgut, zuzugeben.

Die Wirkung dieser biologisch abbaubaren und daher umweltfreundlichen Tenside liegt physikalisch in der Verteilung der in dem Rückgut bzw. in dem Klärschlamm verteilten Nährstoffe für die gegebenenfalls zuzusetzenden Enzyme bzw. selektierten Bakterien in Verbindung mit den Verdickungsmitteln und/oder Absorptionsmitteln. Ihre mobilisierende Funktion können diese als z.B. wäßrige Lösung der grenzflächen- und waschaktiven Substanzen eingesetzten Lösungsvermittler bzw. Netzmittel besonders gut zeigen, wenn sie entweder dem Rückgut vor dem Aufmahlen auf eine definierte Korngröße, die in der Regel unter 10 mm, vorzugsweise unter 5 mm, liegt, zugesetzt werden, bzw. vor der Schlammentwässerung oder durch Aufsprühen auf den Klärschlamm vor dem Mischer, wobei die vorstehend genannten Stoffe leicht in die Poren des teilchenförmigen Rückgutes eingelagert werden können. Die kombinierte Anwendung von Lösungsvermittlern, Verdickungsmitteln und/oder Absorptionsmitteln in Verbindung mit Enzymen und/oder Bakterien hat den Vorteil, daß an die Matrix dieser Verdickungsmittel und/oder Absorptionsmittel, insbesondere Alginate und darin enthaltener Polyuronsäuren sowie Bentonite, anorganische Giftstoffe angelagert werden können und dort so gebunden werden, daß sie nicht die Funktion der Enzyme beeinflussen und die Bakterien abtöten. Wenn nötig, können dem so behandelten Rückgut die bereits vorstehend genannten anorganischen Katalysatoren, wie übliche Zink-, Nickel-, Kupfer$^I$-,Kupfer$^{II}$-Salze in Mengen von 10 bis 1000 ppm, bezogen auf das Rückgut, oder ein Metallgitter aus Kupferstäben, welches sich besonders gut für den Abbau von Dioxinen eignet, zugesetzt sein.

Gemäß einer weiteren Ausführungsform der Erfindung können dem neuen Klärschlamm in Kreislaufführung aus der Vor- und/oder Nachrotte stammendes Rückgut, mit Membraneffektoren versetzt werden, die gegebenenfalls mit einem Absorptionsmittel, insbesondere mit Bentoniten, gemischt sein können. Auch eine Kombination dieser Membraneffektoren mit selektierten Bakterien ist erfindungsgemäß vorgesehen. Mittels der Membraneffektoren können dabei natürliche und künstliche Mischbiozönosen leicht gesteuert werden. Für die Zwecke der Erfindung hat es sich dabei als vorteilhaft erwiesen, die Membraneffektoren in einem handelsüblich erhältlichen, sauer aufgeschlossenem Bentonit eines verhältnismäßig feinen Mahlgrades einzuarbeiten, bevor sie dem Rückgut zugesetzt werden. In Abhängigkeit von dem Ausgangs-Klärschlamm können Membraneffektoren und Bentonit im Verhältnis von 1 : 100 bis 1 : 5000, vorzugseise von 1

: 800 bis 1 : 2000, gemischt werden.

Erfindungsgemäß bestehen diese Membraneffektoren im wesentlichen aus einer Kombination verschiedener Stoffverbindungen. Im wesentlichen können diese aus Aluminiumnicotinat, Natriumsalicylat, Anthrachinon, Alginsäuresilylester, Lithiumcarbonat, ein Gemisch aus Harnstoff und Natriumlaurylsulfat in einem molaren Verhältnis von 1:8, Guanidiniumnitrat sowie Kalium-ortho-ethyldithiocarbamat ausgewählt sein. Für die erfindungsgemäßen Zwecke hat es sich dabei herausgestellt, daß von den vorstehenden acht genannten Stoffen maximal vier in Mischung mit Bentoniten enthalten sein müssen, um die beabsichtigte Wirkung zu erzielen. Erfindungsgemäß enthält das Ausgangsmaterial 10 Gew.-% dieser Verbindungen in feinst gemahlenem Bentonit. Als geeignete Mischung haben sich Mischungen aus Aluminiumnicotinat, Natriumsalicylat, Lithiumcarbonat und Harnstoff/Natriumlaurylsulfat bzw. Mischungen aus Anthrachinon, Alginsäuresilylester, Guanidiniumnitrat und Kalium-ortho-ethyldithiocarbamat in Bentonit gezeigt. Bei Zusatz dieser Membraneffektoren ist es möglich, die toxischen Einflüsse der in den Klärschlämmen enthaltenen toxischen Verbindungen zu mindern, den Kohlenstoffabbau auf unter 25% Kohlenstoff zu verringern, mehr Trockensubstanz und einen geringeren Wassergehalt nach der Vorrotte sowie einen schnelleren Stoffumsatz zu erhalten.

Diese vorstehend genannten Membraneffektoren wirken somit als Katalysatoren derart, daß bei dem mit Membraneffektoren enthaltenen Rückgut versetzten Klärschlamm, auch bei einem geringen OTS-Gehalt, die Geschwindigkeit der Umsetzung des Klärschlamms nicht verringert bzw. sogar erhöht wird. Dieser Zusatz der Membraneffektoren bewirkt überdies ein leichteres Durchdringen der Bakterienmembran durch Sauerstoff, so daß die Aktivität der Bakterien erhöht wird und damit als Folge der Lebenszyklus dieser Bakterien bis zum Absterben schneller durchlaufen wird bzw. durchlaufen werden kann. Als Folge davon kommt es zu einem weitergehenderen Kohlenstoffabbau, was insbesondere für die Zwecke der Deponierung wichtig ist.

Der mit erfindungsgemäßen Verfahren behandelte Klärschlamm enthält nach Vorrotte und Nachrotte weniger als 25% OTS und kann daher als Einheitserde mit einem Mindesthumusanteil, ohne Mischung mit Erde, als Mutterbodenersatz dienen. Das so erhaltene humusähnliche Substrat eignet sich zur Rekultivierung nicht mehr bewirtschafteter landwirtschaftlicher sowie industrieller Nutzflächen mit an diesen Bodenbedingungen angepaßten Pflanzen, wobei je nach den Erfordernissen für Pflanzen notwendige Mineralien zugesetzt werden. Somit stellt das mit dem erfindungsgemäßen Verfahren hergestellte humusähnliche Substrat eine ausgezeichnete Möglichkeit für die Beseitigung kommunaler sowie industrieller Klärschlämme dar, wobei das erfindungsgemäße Verfahren auch auf das in den Kläranlagen anfallende Fettfanggut und Rechengut anwendbar ist. Somit dient das erfindungsgemäß erhaltene humusähnliche Substrat zur chemischen, physikalischen und/oder biologischen Dekontaminierung von Klärschlämmen. Bei Kenntnis des Laststoffes ist es überdies möglich, kontaminierte Böden mit dem erfindungsgemäßen Verfahren, wegen einer besseren Kontrolle des Verlaufes insbesondere chargenweise, in begrenzten Mengen zu dekontaminieren, wobei dem kontaminierten Bodenaushub mit Additiven versetztes Rückgut und mechanisch entwässerter Klärschlamm als Substrat zugesetzt werden.

Die Erfindung wird nachfolgend anhand eines Beispiels näher erläutert:

Ein kommunaler Klärschlamm mit einem TS-Gehalt von ca. 3 % und einem OTS-Gehalt von mehr als 60 % wurde auf in an sich bekannte Weise auf einen TS-Gehalt auf über 25 % mechanisch entwässert, einer Vorrotte über ca. 7 Tage bei Temperaturen von 60 bis 80°C ausgesetzt und teilweise einer Nachrotte bei Temperaturen von 35 bis 80°C, in Abhängigkeit von der Außentemperatur und der Witterung, über einem Zeitraum von 60 bis 80 Tagen unterworfen.

Gemische der aus der Vor- und Nachrotte erhaltenen Produkte werden frischem kommunalen Klärschlamm einer dem Ausgangsklärschlamm im wesentlichen entsprechenden Zusammensetzung und Konzentration zugesetzt, wobei dieses Rückgutgemisch vorher mit ca. 1 Gew.-% gut emulgierender und umweltfreundlicher, nahezu gesättigter Lösung eines grenzflächen- und waschaktiven Netzmittels (Sintac 900 von Multimac), 0,3 Gew.-% eines handelsüblichen, sauer aufgeschlossenen Bentonits eines sehr feinen Mahlgrades (Teilchengröße ca. 90 % unter 0,01 mm) und 0,3 Gew.-% Montmorillonit sowie 1 ppm Enzymgemisch handelsüblicher hydrolytischer Enzyme technischer Reinheit, nämlich Amylase, Cellulase, Protease und Glycoproteinase, und 10 ppm eines Gemisches verschiedener, speziell gezüchteter und adaptierter Arten von Bacillus, Pseudomonas und Streptomyces (Ecolyte MX20 von International Biochemicals) versetzt.

Nach erneutem Durchlauf der Vorrotte von nur noch ca. 3 Tagen und einer erheblich verkürzten Nachrotte von nur noch ca. 40 Tagen, bei einer Miethöhe von ca. 1,50 m und normaler Durchlüftung, wurde ein humusähnliches Substrat eines OTS-Gehaltes von nur noch 24 % erhalten, das einen ausgezeichneten Mutterbodenersatz darstellte.

**Patentansprüche**

1. Verfahren zur biologischen Trocknung von Klärschlamm mit den Verfahrensstufen
   - mechanische Entwässerung des Klärschlamms,
   - aerobe mikrobielle Vorrotte und
   - aerobe mehrwöchige Nachrotte,
   wobei Klärschlamm in ein humusähnliches Substrat umgewandelt wird, **dadurch gekennzeichnet, daß** zur chargenweisen und/oder kontinuierlichen Trocknung des Klärschlamms einem gegebenenfalls vorbehandelten Rückgut als Konditionierungsmittel Additive zugesetzt werden, und das mit Additiven versetzte Rückgut mit neuem unbehandeltem Klärschlamm im Kreislauf geführt wird.

2. Verfahren nach Anspruch 1, **dadurch gekennzeichnet, daß** dem Rückgut als Additive Verdickungsmittel, Absorptionsmittel, Enzyme, Bakterien, Lösungsvermittler oder Membraneffektoren und/oder Mischungen davon zugesetzt werden.

3. Verfahren nach Anspruch 1 oder 2, **dadurch gekennzeichnet, daß** dem Rückgut als Additive Alginate, Bentonite und/oder Montmorillonite in von 0,05 bis 1,5 Gew.-%, bezogen auf das Rückgut, zugesetzt werden.

4. Verfahren nach Anspruch 1 oder 2, **dadurch gekennzeichnet, daß** dem Rückgut hydrolytische Enzyme und/oder selektierte Bakterien in von 0,05 bis 1500 ppm, bezogen auf das Rückgut, zugesetzt werden.

5. Verfahren nach einem der Ansprüche 1 bis 4, **dadurch gekennzeichnet, daß** dem Rückgut als Lösungsvermittler Tenside zugesetzt werden.

6. Verfahren nach einem der vorhergehenden Ansprüche, **dadurch gekennzeichnet, daß** dem Klärschlamm vor der Zugabe des Rückgutes ein Lösungsvermittler zugesetzt wird.

7. Verwendung eines nach dem Verfahren nach einem der Ansprüche 1 bis 6 erhaltenen humusähnlichen Substrates als Austrag zu Rekultivierungszwecken und zur chemischen, physikalischen und/oder biologischen Dekontaminierung von Klärschlämmen und/oder kontaminierten Böden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 153 282 (PURAC AB) <br> * Ansprüche 1-10 * <br> * Seite 3, Zeile 4 - Seite 5, Zeile 12 * <br> * Seite 8, Zeile 27 - Seite 9, Zeile 19 * <br> --- | 1,7 | C05F7/00 <br> C02F11/12 |
| Y | WO-A-9 009 964 (LA TROBE UNIVERSITY) <br> * Ansprüche 1-3,6,8,11 * <br> * Seite 5, Zeile 10 - Zeile 18 * <br> * Seite 15, Zeile 9 - Seite 16, Zeile 16 * <br> --- | 1,7 | |
| A | EP-A-0 322 831 (KÜRNER, RUDOLF) <br> * Ansprüche 1,9 * <br> * Seite 3, Zeile 20 - Zeile 22 * <br> * Seite 3, Zeile 39 - Zeile 41 * <br> --- | 1-3,7 | |
| A | EP-A-0 168 556 (COLUMBUS NEUNKIRCHEN FOUNDRY GMBH & SCHNORR, K.) <br> * Ansprüche 1-9,21 * <br> * Seite 2, Absatz 2 - Seite 3, Absatz 1 * <br> * Seite 4, Absatz 2 * <br> --- | 1,2 | |
| A | EP-A-0 291 665 (RÖHM GMBH) <br> * Ansprüche * <br> --- | 1,5 | **RECHERCHIERTE SACHGEBIETE (Int. Cl.5)** <br><br> C05F <br> C02F |
| P,X | EP-A-0 463 546 (ALLIED COLLOIDS) <br> * Ansprüche 1,3,6,7 * <br> * Spalte 4, Zeile 22 - Spalte 6, Zeile 23 * <br><br> ----- | 1,7 | |

Der vorliegende Recherchenbericht wurde für alle Patentansprüche erstellt

| Recherchenort | Abschlußdatum der Recherche | Prüfer |
|---|---|---|
| DEN HAAG | 15 JULI 1992 | RODRIGUEZ FONTAO M.B |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P0403)